(19) **Europäisches Patentamt**

**European Patent Office**

**Office européen des brevets**

(11) Veröffentlichungsnummer: **0 143 898 B1**

# EUROPÄISCHE PATENTSCHRIFT

(45) Veröffentlichungstag der Patentschrift: 27.01.88

(51) Int. Cl.⁴: **F 16 D 65/853**, F 16 D 25/12

(21) Anmeldenummer: **84109814.8**

(22) Anmeldetag: **17.08.84**

(54) **Reibungsbremse bzw. -kupplung mit einer Zwangskühlung.**

(30) Priorität: 05.09.83 PC /LU83/002 32

(43) Veröffentlichungstag der Anmeldung: 12.06.85 Patentblatt 85/24

(45) Bekanntmachung des Hinweises auf die Patenterteilung: 27.01.88 Patentblatt 88/4

(84) Benannte Vertragsstaaten: AT DE FR GB IT

(56) Entgegenhaltungen:
EP - A - 0 106 594
DE - A - 2 802 676
DE - B - 1 070 509
DE - B - 2 717 353
FR - A - 2 141 216
GB - A - 644 173
GB - A - 916 856
GB - A - 2 087 998
US - A - 2 771 976
US - A - 3 166 165
US - A - 3 292 758
US - A - 3 301 367

(73) Patentinhaber: ZAHNRADFABRIK FRIEDRICHSHAFEN AKTIENGESELLSCHAFT, Löwentaler Strasse 100 Postfach 2520, D-7990 Friedrichshafen 1 (DE)

(72) Erfinder: Saller, Hubert, Drosselweg 26, D-7778 Markdorf (DE)
Erfinder: Dietenberger, Josef, Eisenfurter Strasse, D-7960 Aulendorf (DE)
Erfinder: Ehrlinger, Friedrich Jakob, Karl-Weiss-Strasse 15, D-7990 Friedrichshafen 5 (DE)

(74) Vertreter: Raue, Reimund, Zahnradfabrik Friedrichshafen AG Löwentaler Strasse 100 Postfach 2520, D-7990 Friedrichshafen 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Reibungsbremse bzw. -kupplung mit einer Zwangskühlung durch eine DrucköIversorgung und richtet sich auf eine Koppelung des Betätigungsorganes der Bremse bzw. Kupplung mit der Zwangskühlung, damit eine Kühlung nur bei Betätigung erfolgt und Öl zwischen den Bremsscheiben während des Normalbetriebes keine energieraubenden Schleppmomente mehr verursachen kann.

Aus der US-A 3292758 ist ein über ein beim Verschieben der Kupplungsendlamelle geöffnetes Kugelventil steuerbares Kühlsystem bekannt.

Es sind hier keine Massnahmen zur Verhinderung einer Ölbenetzung der Bremsscheiben ausserhalb der Betätigungszeiten, bzw. wenn der Kolben nicht völlig in Ausgangsstellung zurückgeht, vorgesehen. Somit ist fortlaufend mit Schleppmomenten zu rechnen. Auch münden die Öffnungen radial oberhalb der Reibflächen, so dass das Öl diese nur entgegen der Fliehkraft bestreichen kann.

Die Aufgabe der im Anspruch 1 angegebenen Erfindung ist es daher, eine Anordnung zur Zwangskühlung von Bremsen oder Kupplungen anzugeben, mit welcher sowohl eine Ölzufuhr durch die Welle vermieden als auch ein Ansteigen des Ölspiegels im Bremsenbereich ausserhalb der Bremsbetätigungsphasen während des Betriebes des Fahrzeuges sicher vermeidbar ist und mit der auch der Einsatz von einfachen Fusspedalbetätigungen vereinfacht wird.

Die Lösung dieser Aufgabe wird durch die im Kennzeichen des Anspruches 1 angegebenen Merkmale in folgender Hinsicht erreicht:
- Die Ölzufuhr kann unabhängig von der Wellenausführung erfolgen.
- Die Einspritzung des Öles in die Durchtrittsöffnungen der Bremsscheiben führt unter Fliehkraftausnutzung zu rascher intensiver Kühlung unter gleichzeitiger Bremswirkung.
- Dabei wird nicht nur das zu den Bremsscheiben fliessende Öl nach einer Bremsung über Kühlöffnungen und Nuten in den Reibflächen, wie sie z. B. aus der US-A-2771976 allgemein bekannt sind, leicht abgeschleudert, sondern es fördert das Zähneprofil der immer umlaufenden Bremsscheibe auch bei ungetätigter Bremse oder von Inbetriebnahme der Einrichtung evtl. im Bereich der Bremsscheiben aufgestautes Öl in Richtung der Rücklaufleitung schnell ab.
- Da Öl von der Bremse ferngehalten wird, kann diese bei Einsatz als Feststellbremse (ohne Ölzufuhr) ein höheres Bremsmoment bewirken als bei einfacher Tauchschmierung.

Vorteilhafte Weiterbildungen sind in den Unteransprüchen angegeben:
- Mit einem den Bremsenbereich aussen umschliessenden Ringbund, der gleichzeitig als Aussenlamellenträger ausgeführt sein kann und in den auch die Kolbenrückstellfedern eingelassen sind, kann sowohl ein Ölrückstau vom Ablauf her in den Bremsbereich ausserhalb der Bremsphasen verhindert als auch, selbst bei Lamellenbauart der Bremse, dank der eingelassenen Rückstellfedern eine kurze Bremspaketlänge erreicht werden, die einen kurzen Bremshub ermöglicht, wie er insbesondere bei direkter Pedalbetätigung nötig ist.
- Ein Einbau der Ventile in einen separaten Flanschring ergibt die Möglichkeit, Gehäuse mit bisher üblicher Trockenkühlung der Bremsen abzudichten und auf die erfindungsgemässe Zwangskühlung umzurüsten, ohne dazu das Gehäuse oder die Welle selbst erheblich verändern zu müssen.
- Eine Anwendung der Erfindung bei in Getriebe integrierten Bremsen erlaubt eine Zusammenfassung der Ölumläufe, etwa derart, dass aus dem Bremsenbereich abgeschleudertes Öl im Getriebebereich noch einmal genutzt wird, ehe es zur Pumpe zurückläuft und dass das meistens grössere Getriebegehäuse evtl. zu Abkühlung des Öles beiträgt.
- Eine Doppelnutzung der Andruckplatte der Bremse, auch als Zwischenwand im Gehäuse zur Abtrennung eines an sich mit Tauchschmierung auskommenden Getriebebereiches, erlaubt Leichtbau und sichert den Bremsenbereich vor plötzlichen Öleinströmungen, z. B. bei starker Fahrzeugneigung auf Gefällestrecken.
- Eine Anordnung der Ventile, radial innerhalb eines Ringzylinders, erleichtert die bauliche Ausgestaltung einer Antriebsverbindung des Bremskolbens und der Ventile in der gleichen Stirnwand des Gehäuses.
- Mit dem Frühstart der Ventile wird erreicht, dass bei hohen Reibflächenbelastungen noch keine Zerstörungen wegen unbeabsichtigten Trockenlaufes vorkommen, für den die bei Ölkühlung optimal verwendeten Reibbeläge nicht geeignet sind.
- Die hydrostatische Ankoppelung der Ventile an den Ringzylinder erlaubt auf eine einfache Weise sowohl Kurzhub als auch Frühstart der Zwangskühlung.
- Eine Verzögerung der Ventilrückstellung sichert auch dann noch eine gute Kühlung, wenn der Bremsvorgang beendet ist.
- Mit mechanischen Wirkverbindungen zwischen Kolben und Ventilschliessern werden Dichtungen erspart, und es wird kein Volumen aus der ggf. hydrostatischen Bremsbetätigung benötigt.
- Mit wegübersetzender Mechanik-Wirkverbindung wird auch bei sehr kleinen Kolbenhüben eine starke und rasche Kühlung erreicht.

Die Anwendung der erfindungsgemässen Merkmale ist unter konstruktiver Anpassung bei allen Reibungsbremsen und -kupplungen mit rotierenden Bremsscheiben möglich und senkt sowohl die durch zähes Öl gerade bei Kälte beträchtlichen Energieverluste im ungebremsten Zustand und auch den Wartungsaufwand gegenüber trocken laufenden Bremsen.

Fahrzeuge mit dieser Art Bremsen sind wegen grösserer Bremsenschonung betriebssicherer und zuverlässiger sowie auch vielseitiger einsetzbar dank ihrer Unempfindlichkeit gegen Nässe, Staub usw. Dabei ist die Unterbindung der erfindungsgemässen Bremse bei kürzester Baulänge und ohne Änderung anderer Getriebeelemente, wie Welle oder Bremsscheibenträger usw., möglich. Das entsprechend ausgenutzte Fahrzeug wird auch für den Einsatz in überflutetem Gelände, z. B. Reisfeldern, Bachbetten usw., geeignet.

Die Erfindung wird anhand eines Ausführungsbeispieles für eine Schlepper-Hinterachsbremse mittels folgender schematischer Zeichnungen näher erläutert:

Fig. 1 zeigt einen Längsschnitt durch eine an ein Getriebe anschliessende Bremse mit hydraulisch betätigten Ventilen.

Fig. 2 zeigt eine Variante dazu mit einem direkt vom Kolben mechanisch betätigten Kugelventil.

Fig. 3 Zeigt eine weitere Variante mit einem indirekt über einen Hebel vom Kolben mechanisch mitbetätigten Kugelventil.

Fig. 4 zeigt einen Querschnitt durch das Bremsgehäuse vor der Bremsscheibe mit einer Anordnung von deren Öldurchtritten und ihrem Zähneprofil am Aussenrand.

Fig. 5 zeigt einen Teilschnitt durch den äusseren Ringkanal mit dem Durchlass durch den Ringbund für das abgeschleuderte Öl aus dem inneren Ringraum.

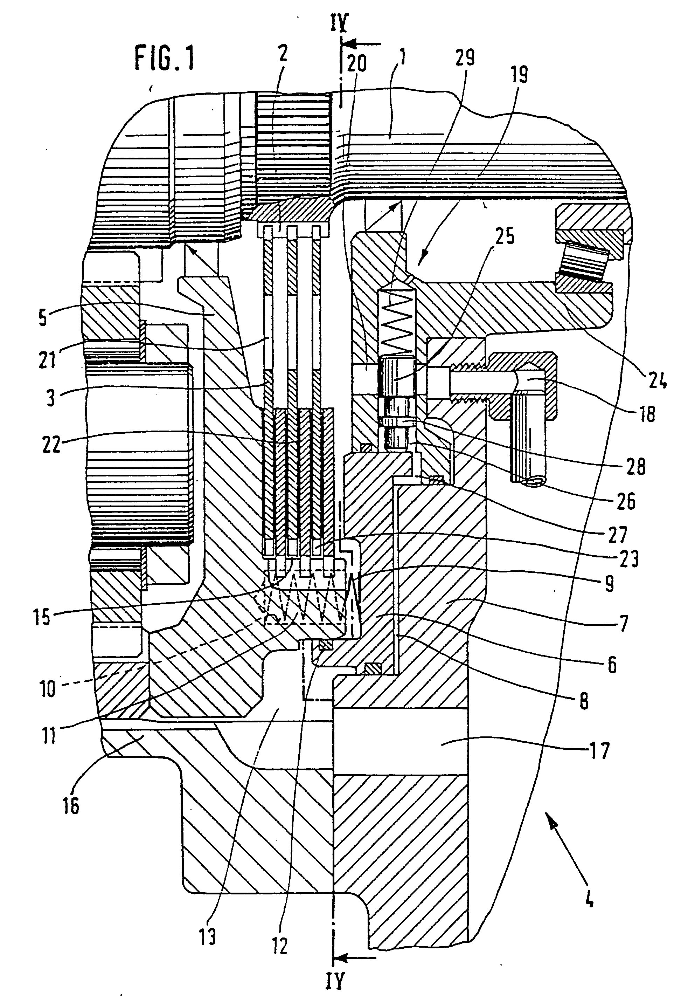

In Fig. 1 läuft auf einer Welle 1 eine auf einem Bremsträger 2 verschieblich gehalterte Bremsscheibe 3 in Drehrichtung um und kann gegen eine im Gehäuse 4 abgestützte Andruckplatte 5 durch einen Kolben 6 abgebremst werden, welcher koaxial zur Welle 1 in einer der Andruckplatte 5 gegenüberliegenden Stirnwand 7 des Gehäuses 4 in einen dort eingearbeiteten Bremszylinder 8 durch Druckmitteldruck verschieblich ist. Der Kolben 6 ist dabei axial durch am Umfang verteilte Rückstellfedern 9 ausser Anlage mit der (den) Bremsscheibe(n) 3 gehalten, welche in Federtaschen 10 geführt sind, die in die Andruckplatte bzw. einen dieser angeformten Ringbund 11 eingearbeitet sind. Dieser Ringbund 11, der bei Mehrscheibenbremsen als Aussenlamellenträger gestaltet sein kann, hat mit dem Kolben 6 eine Runddichtung 12, so dass der nähere Bereich der Bremse 3 gegen den den Ringbund 12 aussen umschliessenden äusseren Ringraum 13 bis auf zwei radiale Durchbrüche 14 im oberen Teil des Umfanges abgedichtet ist, durch welchen Öl aus dem die Bremsscheiben eng umschliessenden inneren Ringraum 15 aus dem Bereich der Bremsscheibe 3 weggeführt werden kann, ohne bei Betrieb von selbst zurückzufliessen. Das sich im äusseren Ringraum 13 sammelnde Öl, welches auch z. T. aus einem evtl. mit dem Bremsengehäuse 4 zusammengebauten Getriebegehäuse 16 zufliessen kann, fliesst über eine Rücklaufleitung 17 ab zu einem (nicht gezeigten) Ölsumpf mit Umwälzpumpe, von wo eine Druckleitung 18 zu einem (oder mehreren) Ventil(en) 19 führt, die in die Stirnwand 7 etwa koaxial zur Welle 1 so eingesetzt sind, dass ihre Austritte 20 etwa auf gleicher radialer Höhe wie Durchtrittsöffnungen 21 der Bremsscheiben 3 und radial innerhalb der eigentlichen Reibfläche zu liegen kommen. Die Reibflächen sind auf bekannte Weise so mit radialen Nuten (nicht gezeigt) versehen, dass sich auf ganzer Fläche, gleichmässig verteilt, radiale Öldurchtrittskanäle ergeben. An ihrem Aussenrand ist die Bremsscheibe 3 mit einem Zähneprofil 23 versehen, das die Aufgabe hat, evtl. sich am Rand aufstauendes Öl aus dem inneren Ringraum 15 in Richtung der Durchbrüche 14 durch den Ringbund 11 hindurchtretend herauszufördern. Je einer der Durchbrüche 14 ist dazu in der oberen Kreishälfte unter etwa 90° Winkelabstand auf jeder Seite der Senkrechten angeordent. Dadurch kann das Öl auch bei wechselnden Drehrichtungen aus dem oberen Ringraum 15 schnell abgeführt werden.

Die Ventile 19 haben nach dieser Fig. 1 als hydraulische Verstellkolben funktionierende Schliesser 25, deren Druckraum 26 mit dem Bremszylinder 8 eine Verbindung 27 hat. Die Schliesser 25 stehen quer zur Achse der Ventilaustritte 20 und haben einen bei Druckbelastung den Durchfluss von der Druckleitung 18 zum Austritt 20 freigebenden Öffnungsquerschnitt 28. Bei Druckentlastung sind die Schliesser 25 über ebenfalls im Flanschring 24 eingelassene Schliesser-Rückstellfedern 29 in ihrer Ausgangslage zurückstellbar. In der Verbindung 27 kann eine Rückströmdrossel (nicht gezeigt) eingebaut sein, um die Ventile 19 nach Betätigung länger offenzuhalten als der mitbetätigte Kolben 6. Bei dessen Druckbelastung erhalten die kleinen Verstellkolben 25 einen ausreichenden Öffnungsdruck zu einem zeitlich früher gelegenen Zeitpunkt, als der Kolben 6 über die Bremsscheibe 3 gegen die Andruckplatte 5 in Anschlag kommt, so dass keine unzulässige Reibflächenbelastung vor dem Kühlungseinsatz möglich ist.

Sowohl durch die Unterbringung der Ventile 19 auf etwa gleicher axialer Länge wie der Kolben 6 als auch durch die Möglichkeit, wegen der sich selbst entleerenden Bremsscheiben 3 nur einen sehr kleinen Lüftweg vorsehen zu brauchen, wird erheblich an Baulänge gespart.

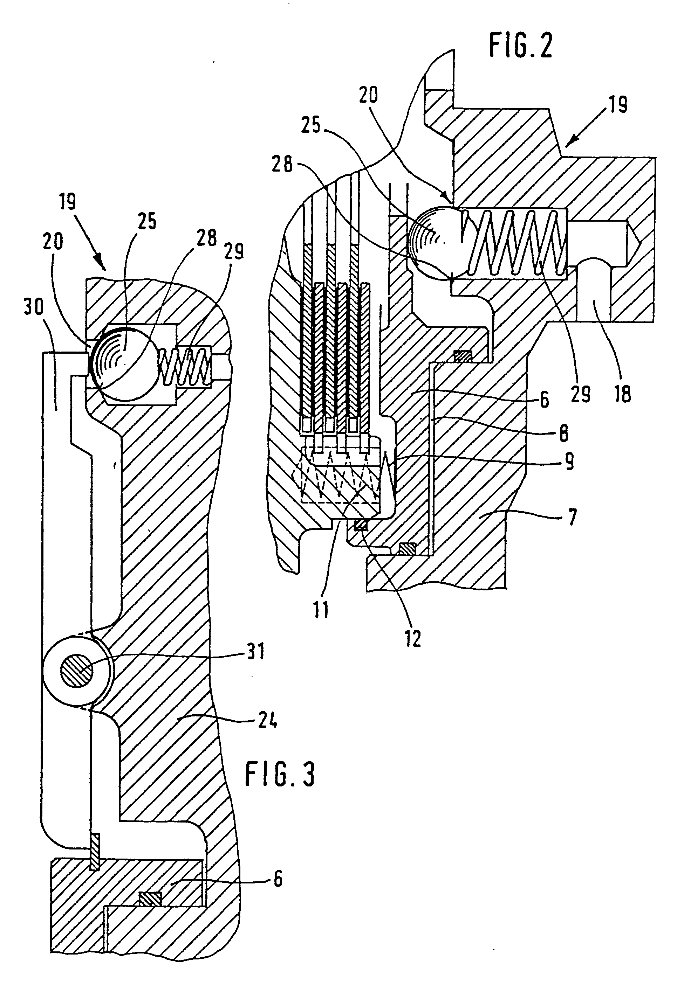

In Fig. 2 ist ein kugelförmiger Schliesser 25 unmittelbar durch den Kolben auf mechanische Weise in Richtung Öffnungshub mitnehmbar. Die Ventile 19 öffnen sich dabei unter dem Druck der Federn 29 unter etwa koaxialer Bewegung des Schliessers 25 in Richtung des Weges des Kolbens 6. Die Rückstellfeder 9 des Kolbens 6 wird dabei stärker belastet, der Öffnungsdruck des Kolbens 6 dagegen entlastet.

In Fig. 3 ist ebenfalls ein kugelförmiger Schliesser 25 mit in Druckrichtung öffnender Feder 29 vorgesehen, jedoch deren Öffnungshub über einen Hebel 30 kontrolliert, der sowohl auf der Kugel des Schliessers 25 als auch auf dem Bremskolben 6 abgestützt und in einem Lager 31 auf dem Flanschdeckel 24 geführt ist.

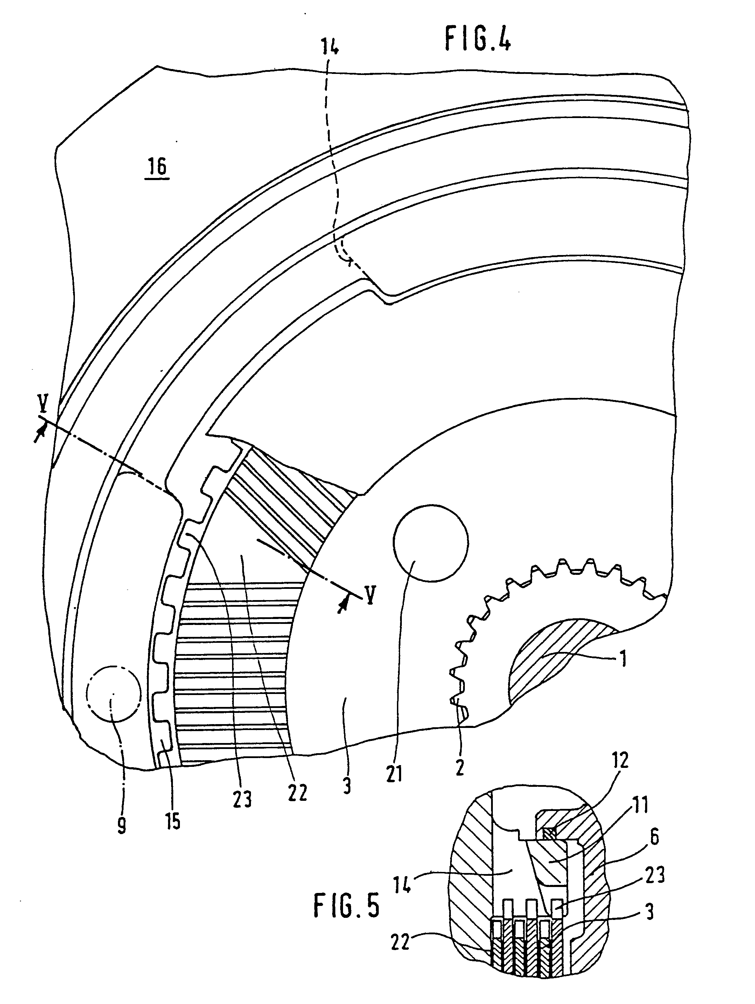

In Fig. 4 ist die Anordnung der Durchtrittsöffnungen 21 in der Bremsscheibe 3 sowie deren Zähneprofil 23 am Aussenrand dargestellt sowie die Lage der Durchbrüche 14 durch den Ringbund 11.

In Fig. 5 ist die Ausführung der Durchbrüche 14 nochmals als Teilschnitt dargestellt.

Die Funktion der Zwangskühlung ist aus den vorstehenden Konstruktionserläuterungen auch allgemein ersichtlich und kann in wirkungsgleicher Weise auch mit anderen Ventilausgestaltungen und -anordnungen erreicht werden.

Als für den Betriebserfolg besonders wesentlich haben sich die Ölverteilungseffekte durch die mitrotierenden Durchtrittsöffnungen 21 und die Abschleudereffekte durch das Zähneprofil 23 sowie der Ölrückfluss über die Durchbrüche 14 bei gleichzeitiger Verhinderung von Ölstau im inneren Ringraum 15 erwiesen.

## Patentansprüche

1. Reibungsbremse bzw. -kupplung mit einer Zwangskühlung, insbesondere an Kraftfahrzeugen,
- mit einem Bremsengehäuse (4), in welches eine mit Absperrorganen versehene Druckleitung mündet und aus welchem eine Rücklaufleitung (17) zu einem Ölsumpf abgeht
- sowie mit einem Bremskolben (6), welcher zwecks Bremsung gegen eine bzw. mehrere auf einer Welle (1) umlaufende Bremsscheibe(n) (3) in Anlagestellung verschieblich ist,
- wobei eine Wirkverbindung zwischen Bremskolben (6) und aus in einer Stirnwand des Gehäuses (4) angeordneten Ventilen (19) besteht, mit welcher die Öffnungsstellung der Absperrorgane (19) und Anlagestellung des Bremskolbens (6) zeitlich zusammenlegbar sind, dadurch gekennzeichnet,
- dass die Austritte (20) der Ventile (19) axial vor Durchlassöffnungen (21) der umlaufenden Bremsscheibe (3) angeordnet sind
- und dass die Bremsscheiben (3) sowohl an sich bekannte Nuten haben, welche radiale Kanäle auf den Reibflächen (22) bilden und an ihrem Aussenrand ein Zähneprofil (23) aufweisen,
- sowie dass das Zähneprofil (23) zwischen dem Kolben (6) und dem Gehäuse (4) bzw. in der darin gehalterten Andruckplatte (5) in einen inneren Ringraum (15) eintaucht, der über Durchbrüche (14) in der oberen Hälfte des Gehäuses (4) bzw. der Andruckplatte (5) mit der Rücklaufleitung (17) verbunden ist,
- und dass das Zähneprofil (23) Öl, welches sich im Ringraum (15) aufstaut, durch die Durchbrüche (14) herausfördert.

2. Bremse nach Anspruch 1, dadurch gekennzeichnet,
- dass zwischen dem Kolben (6) und der bzw. den umlaufenden Bremsscheibe(n) (3) bzw. zwischen der (den) Bremsscheibe(n) (3) und der Andruckplatte (5) an sich bekannte feststehende Aussenlamellen vorgesehen sind, welche einen Innendurchmesser haben, der grösser ist als der Teilkreis, auf dem die Ventile (19) angeordnet sind und welche auf einem Ringbund (11) des Gehäuses (4) bzw. der Andruckplatte (5) drehfest gehalten und axial verschieblich geführt sind,
- und wobei in den Ringbund (11) Rückstellfedern (9) für den Kolben (6) eingelassen sind und er radiale Durchtrittsöffnungen (21) in Richtung eines äusseren, in das Gehäuse (4) eingeformten Ringraumes (13) aufweist, aus dem die Rücklaufleitung (17) abgeht.

3. Bremse nach Anspruch 1 oder 2, dadurch gekennzeichnet, dass die Ventile (19) in einem Flanschring (24) eingebaut sind, welcher als separate Baugruppe radial zwischen Kolben (6) bzw. Gehäuse (4) und Welle (1) eingedichtet ist.

4. Bremse nach einem der vorstehenden Ansprüche, dadurch gekennzeichnet, dass das Bremsengehäuse (4) Teil eines Getriebegehäuses (16) ist und die Rücklaufleitung (17) über enge Verbindungsbohrungen auch das aus dem Getriebegehäuse (16) anfallende Rücklauföl aufnimmt.

5. Bremse nach einem der vorstehenden Ansprüche, dadurch gekennzeichnet, dass die Austritte (20) der Ventile (19) radial innerhalb eines in die Stirnwand (7) des Gehäuses (4) eingelassenen ringförmigen Bremszylinders (8) gelegen sind, in welchem der Bremskolben (6) druckmittelbetätigbar geführt ist.

6. Bremse nach Anspruch 1, 2 oder 3, dadurch gekennzeichnet, dass die Wirkverbindung zwischen Kolben (6) und Ventilen (19) Mittel aufweist, welche die Ventile (19) zeitlich früher in die Öffnungsstellung bringen als den Kolben (6) in die Anschlagstellung gegen Bremsscheiben (3) und Andruckplatte (5).

7. Bremse nach Anspruch 5 oder 6, dadurch gekennzeichnet, dass die Ventile (19) gegen die Federn (29) öffnende Schliesser (25) in Form kleiner Verstellkolben aufweisen, welche in quer zu den Austritten (20) angeordneten Druckräumen (26) durch den Druckmitteldruck aus dem Bremszylinder (8) radial zur Welle (1) verschieblich sind.

8. Bremse nach Anspruch 6 oder 7, dadurch gekennzeichnet, dass den Ventilen (19) an sich bekannte Drosseln zugeordnet sind, welche die Rückstellung der Schliesser (25) nach einer Bremsung zeitlich verzögern.

9. Bremse nach einem der Ansprüche 1 bis 5, dadurch gekennzeichnet, dass die Ventile (19) gegen Federn (29) öffnende Schliesser (25) aufweisen, welche koaxial zum Weg des Kolbens (6) über mechanische Verbindungen mit diesem verschieblich sind.

10. Bremse nach Anspruch 9, dadurch gekennzeichnet, dass die mechanische Verbindung eine Übersetzung zwischen dem Weg des Kolbens (6) und dem Hub des Ventils (19) aufweist, welche grössere Austrittsquerschnitte schon bei Bremsbeginn öffnet.

## Claims

1. Friction brake or clutch with forced cooling, primarily for motor vehicles,
- with a brake housing (4) in which a pressure line fitted with blocking elements has its opening and from which a recirculation duct (17) leads to an oil sump,
- and with a brake piston (6), which is shiftable against one or more brake discs (3) rotating around a shaft (1) in order to achieve the braking effect,
- whereby an effective connection ist present between the brake piston (6) and valves (19) arranged in a front wall of the housing (4), by means of which the opening position of the brake piston (6) are achieved simultaneously, characterized in that
- the outlet ports (20) of the valves (19) are arranged axially in front of the through-openings (21) in the rotating brake disc (3),
- the brake discs (3) have toothed profiles (23) on their outer peripheries and grooves of a well-known type which form radial channels on the friction faces (22),
- the toothed profile (23) projects between the piston (6) an the housing (4) or the counter plate (5) into an inner annular space (15), which is connected by openings (14) in the upper half of the housing (4) or the counter plate (5) with the recirculation duct (17),
- and that the toothed profile (23) expels oil which accumulates in the annular space (15) through the openings (14).

2. Brake according to Claim 1, characterized in that outer non rotating brake discs are provided between the brake piston (6) and the rotating brake disc respectively discs (3) respectively between the rotating brake disc respectively discs and the counter plate (5), said non rotating brake discs having an inner circle in which the valves (19) are arranged, the outer discs being axially shiftable and held in a torque-free manner on the annular collar (11) of the housing (4) or the counter plate (5),
- and whereby recoil springs (9) for the piston (6) are incorporated in the annular collar (11), there being radial through-openings (21) which extend towards an annular space (13) enclosed in the housing (4), from which the recirculation duct (17) exits.

3. Brake according to Claim 1 or 2, characterized in that the valves (19) are installed in a flange ring (24), which is sealed between the piston (6) or the housing (4) and the shaft (1) as a separate installation unit.

4. Brake according to one of the preceding Claims, characterized in that the brake housing (4) is part of a transmission housing (16) and the recirculation duct (17) also receives recirculating oil from the transmisson housing (16) via narrow communicating holes.

5. Brake according to one of the preceding Claims, characterized in that the outlet ports (20) of the valves (19) are arranged radially within the ring-shaped brake cylinder (8) which is enclosed by the front wall (7) of the housing (4), the brake piston (6) being operated by means of a pressure medium within the cylinder.

6. Brake according to Claim 1, 2 or 3, characterized in that the effective connection between the piston (6) and the valves (19) is so arranged that the valves (19) reach their open position before the piston (6) comes into contact with the brake discs (3) and the counter plate (5).

7. Brake according to Claim 5 or 6, characterized in that the closing members (25) of the valves (19) are opposed by springs (29) and take the form of small variable pistons which can be moved radially to the shaft (1) by the pressure medium within pressure chambers (26) which are arranged perpendicularly to the outlet ports (20).

8. Brake according to Claim 6 or 7, characterized in that throttles of a well-known type are incorporated in the valves (19), and they retard the return of the closing members (25) after the braking action is completed.

9. Brake according to Claims 1 to 5, characterized in that the valves (19) have closing members (25) which are opposed by springs (29) and can be moved coaxially with the path of the piston (6) by means of mechanical connections.

10. Brake according to Claim 9, characterized in that the mechanical connection introduces a ratio step between the path of the piston (6) and the stroke of the valve (19) which opens the outlet ports to a greater extent right at the start of the braking action.

**Revendications**

1. Frein ou embrayage à friction et à refroidissement forcé, notamment pour véhicules à moteur, comportant
- un carter de frein (4) dans lequel débouche une conduite à pression pourvue d'organes d'arrêt et duquel sort une conduite de retour (17) vers un carter d'huile,
- un piston de freinage (6) qui, pour le freinage, coulisse jusqu'à une position d'appui contre un ou plusieurs disque(s) de freinage (3) tournant sur un arbre (1),
- et dans lequel il y a une liaison active entre le piston de freinage (6) et des sous-papes (19) disposées dans une paroi frontale du carter (4), cette liaison étant agencée pour combiner dans le temps la position ouverte des organes d'arrêt (19) et la position d'appui du piston de freinage (6), caractérisé en ce que
- les sorties (20) des soupapes (19) sont placées axialement devant des orifices de passage (21) ménagés dans ls disques tournants de freinage (3),
- les disques de freinage (3) comportent en outre des rainures connues en soi formant des canaux radiaux dans les surfaces de friction (22), et un profil denté (23) sur leur bord extérieur,
- le profil denté (23) pénètre dans un espace annulaire intérieur (15) ménagé entre le piston (6) et le carter (4) ou dans le plateau d'appui (5) maintenu dans celui-ci, cet espace annulaire étant relié à la conduite de retour (17) par des perforations (14) dans la moitié supérieure du carter (4) ou de la plaque d'appui (5),
- et le profil denté (23) laisse sortir par les perforations (14) l'huile qui s'accumule dans l'espace annulaire (15).

2. Frein selon la revendication 1, caractérisé en ce que

– entre le piston (6) et le ou les disque(s) tournants de freinage (3) et/ou ce ou ces disque(s) (3) et le plateau d'appui (5), il est prévu des disques extérieurs fixes connus en soi, lesquels ont un diamètre intérieur supérieur à celui de l'arc de cercle sur lequel sont disposées les soupapes (19), ces disques extérieurs étant maintenus fixes en rotation et guidés en coulissement axial sur un rebord annulaire (11) du carter (4) ou du plateau d'appui (5),
– des ressorts de rappel (9) du piston (6) sont logés dans le rebord annulaire (11), et celui-ci comporte des ouvertures radiales (21) de passage en direction d'un espace annulaire extérieur (13) qui est ménagé dans le carter (4) et duquel sort la conduite de retour (17).

3. Frein selon la revendication 1 ou 2, caractérisé en ce que les soupapes (19) sont montées dans un collet annulaire (24) formant un ensemble constructif séparé qui est monté radialement de manière étanche entre le piston (6) ou le carter (4) et l'arbre (1).

4. Frein selon l'une des revendications précédentes, caractérisé en ce que le carter de frein (4) fait partie d'un carter de transmission (16) et en ce que la conduite de retour (17) reçoit également, à travers de petits trous de liaison, le retour d'huile provenant du carter de transmission (16).

5. Frein selon l'une des revendications précédentes, caractérisé en ce que les sorties (20) des soupapes (19) sont placées radialement à l'intérieur d'un cylindre annulaire de frein (8) ménagé dans la paroi frontale (7) du carter (4) et dans lequel le piston de freinage (6) se déplace de manière coulissante sous la pression d'un fluide.

6. Frein selon la revendication 1, 2 ou 3, caractérisé en ce que la liaison active entre le piston (6) et les soupapes (19) comporte des moyens qui mettent les soupapes (19) en position ouverte avant que le piston (6) soit en position d'appui contre les disques de frein (3) et le plateau d'appui (5).

7. Frein selon la revendication 5 ou 6, caractérisé en ce que les soupapes (19) comportent des organes d'obturation (25) s'ouvrant contre la force de ressorts (29) et constitués par des petits tiroirs coulissent radialement par rapport à l'arbre (1) dans des chambres de pression (26) disposées perpendiculairement aux sorties (20), sous l'effet du fluide sous pression provenant du cylindre de frein (8).

8. Frein selon la revendication 6 ou 7, caractérisé en ce que le soupapes (19) sont associées à des étranglements connus en soi qui retardent le rappel de l'organe d'obturation (25) après un freinage.

9. Frein selon l'une des revendications 1 à 5, caractérisé en ce que les soupapes (19) comportent des organes d'obturation (25) qui s'ouvrent contre la force de ressorts (29) et qui coulissent coaxialement à la course du piston (6) grâce à des liaisons mécaniques avec celui-ci.

10. Frein selon la revendication 9, caractérisé en ce que ladite liaison mécanique présente, entre la course du piston (6) et la course de la soupape (19), un rapport de transmission qui fait ouvrir de plus grandes sections de sortie déjà au début du freinage.

FIG.1

FIG.2

FIG.3

FIG.4

FIG.5